# EUROPEAN PATENT APPLICATION

(11) **EP 1 686 449 A2**
(43) Date of publication of application: **02.08.2006**
(21) Application number: 05113059.9
(22) Date of filing: 29.12.2005
(51) Int. Cl.: G06F 1/32

(54) **System Control By Stylus Location**

(30) Priority: 28.01.2005 US 44712
(71) Applicant: MICROSOFT CORPORATION, Redmond, WA 98052 (US)
(72) Inventor: Keely, Leroy B., Redmond, Washington 98052 (US); DeMaio, Pasquale, Redmond, Washington 98052 (US)
(74) Representative: Grünecker, Kinkeldey, Stockmair & Schwanhäusser Anwaltssozietät

(57) **Abstract**

A system and method for controlling a stylus-based computer based on the location of a stylus is described. In some aspects, removing a stylus from storage may turn on the computer system. In other aspects, power consumed by a digitizer may be modified in accordance with the location of a stylus.

## Description

### BACKGROUND OF THE INVENTION

### Field Of The Invention

Aspects of the present invention relate to computing systems. More particularly, aspects of the present invention relate to controlling a stylus-based computer system based on the location of a stylus.

### Description Of Related Art

Computing systems accept a variety of inputs. Most computer systems are controlled by keyboards and mice. Some computing systems are controlled by a stylus. In some cases, the stylus is the only means of receiving user input. In other cases, keyboards and mice are used in conjunction with the stylus to convey user input.

Two issues exist with stylus-based computers. First, styluses are often not tethered to the computing device. While providing freedom to the user to use the stylus as easily as pen on paper, the user is often faced with trying to find a misplaced stylus.

Second, stylus-based computing systems generally include a battery power system (primary or secondary). A digitizer, used to determine a user's input, consumes power. When running on battery power and using a keyboard or mouse, a stylus-enabled computer may be powering a digitizer that is not being used. This lack of use wastes power that could be used instead to power the computer for a longer period of time.

An improved system for controlling a stylus-based computer is needed.

### BRIEF SUMMARY OF THE INVENTION

Aspects of the present invention address one or more of the problems described above, thereby providing a system and process for controlling operation of a stylus-based computing system.

### BRIEF DESCRIPTION OF THE DRAWINGS

Aspects of the present invention are illustrated by way of example and not limited in the accompanying figures in which like reference numerals indicate similar elements.

Figure 1 shows an illustrative example of a general-purpose computing environment in accordance with aspects of the present invention.

Figure 2 shows an illustrative example of a tablet computer in accordance with aspects of the present invention.

Figures 3A and 3B show styluses and storage locations associated with stylus-based computers in accordance with aspects of the present invention.

Figure 4 shows storage sensors in accordance with aspects of the present invention.

Figure 5 shows a process for controlling the state of a stylus-based computer in accordance with aspects of the present invention.

Figure 6 shows a process for alerting a user while changing operation states of a stylus-based computer in accordance with aspects of the present invention.

Figure 7 shows a process for controlling power to a digitizer in accordance with aspects of the present invention.

### DETAILED DESCRIPTION OF THE INVENTION

Aspects of the present invention relate to controlling the operation of a stylus-based computer based on the movement or location of a stylus.

This document is divided into sections to assist the reader. These sections include: overview of controlling stylus-based computers, characteristics of ink, terms, general-purpose computing environment, controlling the state of a stylus-based computer, and controlling the state of a digitizer.

It is noted that various connections are set forth between elements in the following description. It is noted that these connections in general and, unless specified otherwise, may be direct or indirect and that this specification is not intended to be limiting in this respect.

### Overview of Controlling Stylus-Based Computers

Stylus-based computers are becoming increasingly common, both in the office and at home. Users use stylus-based computers to more readily interact with content. The content may include electronic ink of that the user creates or may be information accessible by a pen-driven interface. Advances have been made with respect to creating and manipulating electronic ink as well as developing interfaces that are more stylus-friendly. Aspects of the present invention described a variety of court approaches to improving operation of a stylus-based computer based on the location of the stylus itself

Locations for a stylus are generally referred to herein as being in one of three locations. A first of the three locations is referred to as being stowed within a housing of the stylus-based computer. The second of the three locations is referred to as a holding location for a stylus. This holding location may include a temporary resting location for the stylus. Both the first and second locations may be collectively referred to as a storage location. The third of the three locations is outside or apart from these previous two locations. For instance, a user actively writing with the stylus or holding the stylus apart from the digitizer may be included as part of the third location.

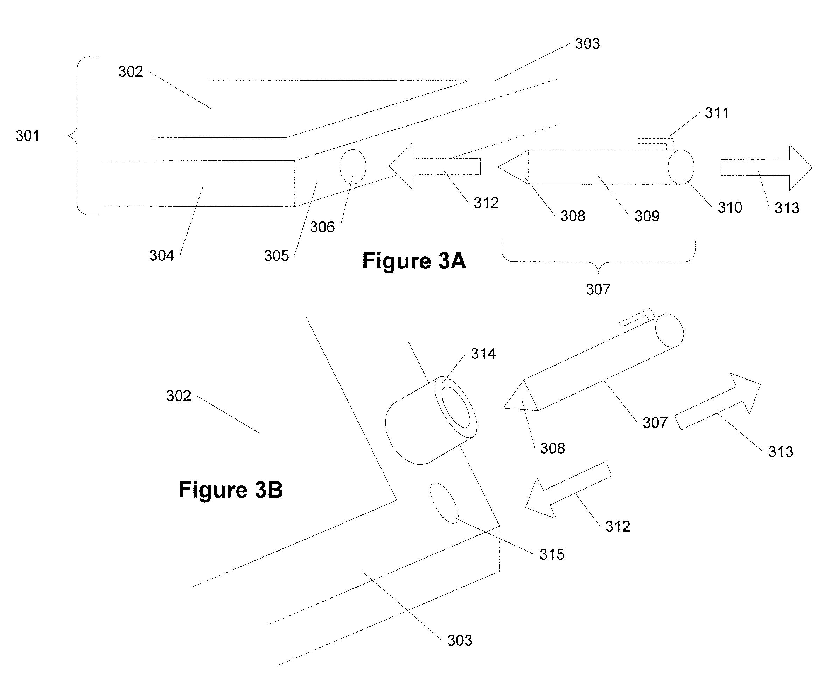

Figures 3A and 3B show various illustrative examples of the first and second locations described above. Figure 3A shows a stylus-based computing system 301 having a display and digitizer region 302, with the display in digitizer region 302 residing in an upper surface 303. The stylus-based computing system 301 may also include a first side 304 and a second side 305. The stylus-based computing system 301 may include an aperture 306 through which a stylus 307 may be moved into a storage chamber. Stylus 307 may include a tip 308, a body 309 (which may or may not include one or more buttons), and an end 310. Stylus 307 may or may not include clip 311. Stylus 307 may be moved into and out of the storage chamber through aperture 306 in the direction of arrows 312 and 313.

Figure 3B shows a temporary storage receptacle 314 on the front surface 303 of stylus-based computer 301. Temporary storage receptacle 314 may be long enough to hold at least a tip 308 of stylus 307 or, in the case of a stylus with a long tip 308, may only hold a portion of tip 308. The cavity within temporary storage receptacle 314 may not protrude into surface 303. Alternatively, the cavity within temporary storage receptacle 314 may continue into at least the surface 303. Further, instead of a raised temporary storage receptacle 314, the system may include a recessed opening 315 that may only hold a portion of stylus 307. Again, stylus 303 may be moved into temporary storage receptacle 314 or aperture 315 in the direction of arrows 312 and 313. A difference between a chamber formed by aperture 306 and the chambers formed by storage receptacle 314 and aperture 315 is that the chamber associated with aperture 306 may be long enough to substantially contain most if not all of stylus 307. The chambers formed by storage receptacle 314 and aperture 315 are not as deep as the chamber associate with aperture 306.

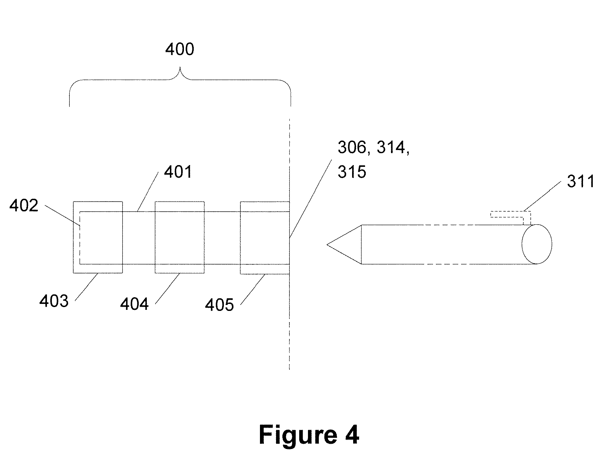

Further, the concept of Figure 3B may also be extended to a tray in which to place a stylus. The tray may include an indentation with the sensors of figure 4 beneath it.

Figure 4 shows internal components that may be used with chambers associated with the aperture 306, receptacle 314, or aperture 315. Collectively, the chambers are shown in Figure 4 as chamber 400. Chamber 400 may include sidewalls 401 and an end wall 402. Optionally, sidewalls 401 and end wall 402 may be integrated leaving no transition between them. Chamber 400 may include one or more sensors 403-405. The sensors 403-405 may be spaced along the length of sidewall 401. Chambers may also optionally include a spring or other expulsion mechanism and/or locking mechanism to help push the stylus out for a user.

Sensors 403-405 may be selected from the group of optical sensors, mechanical sensors, electro- mechanical sensors, electrical sensors (including capacity and inductive sensors), and the like. These sensors alone or in combination may sense the storage or removal or simply change in state of whether or not a stylus 307 is in chamber 400. Further, in at least one optional aspect of the present invention, one of sensors 403-405 may include a small digitizer that at least determines the presence of tip 308 (for instance, a Wacom-type digitizer and associated pen). In yet another aspect of the present invention, the identity of stylus 307 may be determined based on the identification of pen tip 308.

Sensors 403-405 are shown here as three distinct sensors. Alternatively, a single sensor (403, 404, or 405) may run the entire length of sidewall 401.

### Characteristics of Ink

As known to users who use ink pens, physical ink (the kind laid down on paper using a pen with an ink reservoir) may convey more information than a series of coordinates connected by line segments. For example, physical ink can reflect pen pressure (by the thickness of the ink), pen angle (by the shape of the line or curve segments and the behavior of the ink around discreet points), and the speed of the nib of the pen (by the straightness, line width, and line width changes over the course of a line or curve). Further examples include the way ink is absorbed into the fibers of paper or other surface it is deposited on. These subtle characteristics also aid in conveying the above listed properties. Because of these additional properties, emotion, personality, emphasis and so forth can be more instantaneously conveyed than with uniform line width between points.

Electronic ink (or ink) relates to the capture and display of electronic information captured when a user uses a stylus-based input device. Electronic ink refers to a sequence or any arbitrary collection of strokes, where each stroke is comprised of a sequence of points. The strokes may have been drawn or collected at the same time or may have been drawn or collected at independent times and locations and for independent reasons. The points may be represented using a variety of known techniques including Cartesian coordinates (X, Y), polar coordinates (r, 0), and other techniques as known in the art. Electronic ink may include representations of properties of real ink including pressure, angle, speed, color, stylus size, and ink opacity. Electronic ink may further include other properties including the order of how ink was deposited on a page (a raster pattern of left to right then down for most western languages), a timestamp (indicating when the ink was deposited), indication of the author of the ink, and the originating device (at least one of an identification of a machine upon which the ink was drawn or an identification of the pen used to deposit the ink) among other information.

### Terms

Ink A sequence or set of strokes with properties. A sequence of strokes may include strokes in an ordered form. The sequence may be ordered by the time captured or by where the strokes appear on a page or in collaborative situations by the author of the ink. Other orders are possible. A set of strokes may include sequences of strokes or unordered strokes or any combination thereof. Further, some properties may be unique to each stroke or point in the stroke (for example, pressure, speed, angle, and the like). These properties may be stored at the stroke or point level, and not at the ink level

Stroke A sequence or set of captured points. For example, when rendered, the sequence of points may be connected with lines. Alternatively, the stroke may be represented as a point and a vector in the direction of the next point. In short, a stroke is intended to encompass any representation of points or segments relating to ink, irrespective of the underlying representation of points and/or what connects the points.

Point Information defining a location in space. For example, the points may be defined relative to a capturing space (for example, points on a digitizer), a virtual ink space (the coordinates in a space into which captured ink is placed), and/or display space (the points or pixels of a display device).

Document Any electronic file that has a viewable representation and content. A document may include a web page, a word processing document, a note page or pad, a spreadsheet, a visual presentation, a database record, image files, and combinations thereof.

### General-Purpose Computing Environment

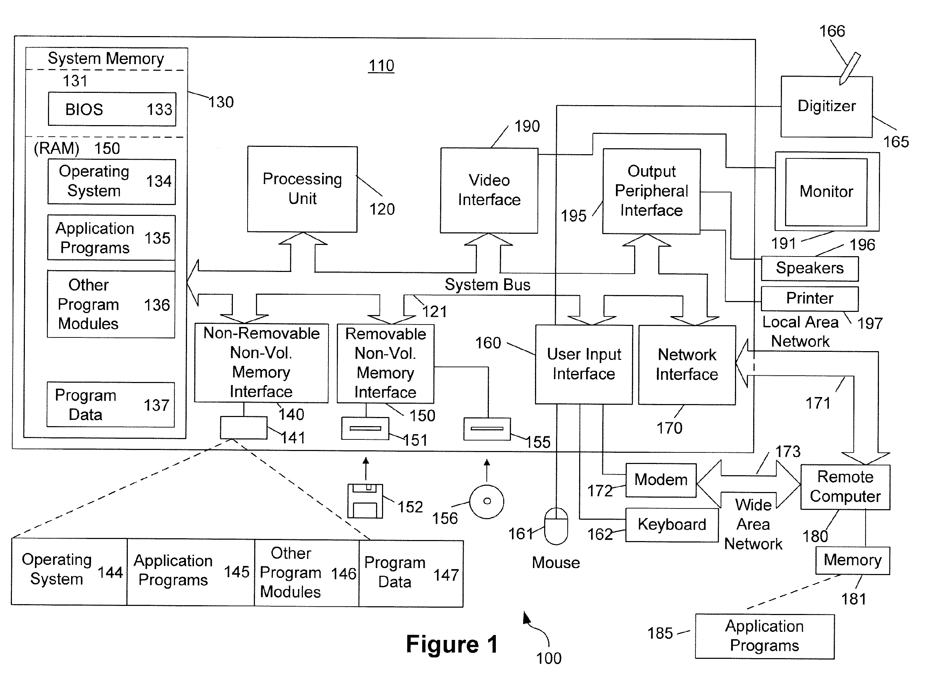

Figure 1 illustrates an example of a suitable computing system environment 100 on which the invention may be implemented. The computing system environment 100 is only one example of a suitable computing environment and is not intended to suggest any limitation as to the scope of use or functionality of the invention. Neither should the computing environment 100 be interpreted as having any dependency or requirement relating to any one or combination of components illustrated in the exemplary operating environment 100.

The invention is operational with numerous other general purpose or special purpose computing system environments or configurations. Examples of well known computing systems, environments, and/or configurations that may be suitable for use with the invention include, but are not limited to, personal computers, server computers, handheld or laptop devices, multiprocessor systems, microprocessor-based systems, set top boxes, programmable consumer electronics, network PCs, minicomputers, mainframe computers, distributed computing environments that include any of the above systems or devices, and the like.

The invention may be described in the general context of computer-executable instructions, such as program modules, being executed by a computer. Generally, program modules include routines, programs, objects, components, data structures, etc., that perform particular tasks or implement particular abstract data types. The invention may also be practiced in distributed computing environments where tasks are performed by remote processing devices that are linked through a communications network. In a distributed computing environment, program modules may be located in both local and remote computer storage media including memory storage devices.

With reference to Figure 1, an exemplary system for implementing the invention includes a general purpose computing device in the form of a computer 110. Components of computer 110 may include, but are not limited to, a processing unit 120, a system memory 130, and a system bus 121 that couples various system components including the system memory to the processing unit 120. The system bus 121 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus also known as Mezzanine bus.

Computer 110 typically includes a variety of computer readable media. Computer readable media can be any available media that can be accessed by computer 110 and includes both volatile and nonvolatile media, removable and non-removable media. By way of example, and not limitation, computer readable media may comprise computer storage media and communication media. Computer storage media includes both volatile and nonvolatile, and removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can accessed by computer 110. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of the any of the above should also be included within the scope of computer readable media.

The system memory 130 includes computer storage media in the form of volatile and/or nonvolatile memory such as read only memory (ROM) 131 and random access memory (RAM) 132. A basic input/output system 133 (BIOS), containing the basic routines that help to transfer information between elements within computer 110, such as during start-up, is typically stored in ROM 131. RAM 132 typically contains data and/or program modules that are immediately accessible to and/or presently being operated on by processing unit 120. By way of example, and not limitation, Figure 1 illustrates operating system 134, application programs 135, other program modules 136, and program data 137.

The computer 110 may also include other removable/non-removable, volatile/nonvolatile computer storage media. By way of example only, Figure 1 illustrates a hard disk drive 141 that reads from or writes to non-removable, nonvolatile magnetic media, a magnetic disk drive 151 that reads from or writes to a removable, nonvolatile magnetic disk 152, and an optical disk drive 155 that reads from or writes to a removable, nonvolatile optical disk 156 such as a CD ROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 141 is typically connected to the system bus 121 through a non-removable memory interface such as interface 140, and magnetic disk drive 151 and optical disk drive 155 are typically connected to the system bus 121 by a removable memory interface, such as interface 150.

The drives and their associated computer storage media discussed above and illustrated in Figure 1, provide storage of computer readable instructions, data structures, program modules and other data for the computer 110. In Figure 1, for example, hard disk drive 141 is illustrated as storing operating system 144, application programs 145, other program modules 146, and program data 147. Note that these components can either be the same as or different from operating system 134, application programs 135, other program modules 136, and program data 137. Operating system 144, application programs 145, other program modules 146, and program data 147 are given different numbers here to illustrate that, at a minimum, they are different copies. A user may enter commands and information into the computer 20 through input devices such as a keyboard 162 and pointing device 161, commonly referred to as a mouse, trackball or touch pad. Other input devices (not shown) may include a microphone, joystick, game pad, satellite dish, scanner, or the like. These and other input devices are often connected to the processing unit 120 through a user input interface 160 that is coupled to the system bus, but may be connected by other interface and bus structures, such as a parallel port, game port or a universal serial bus (USB). A monitor 191 or other type of display device is also connected to the system bus 121 via an interface, such as a video interface 190. In addition to the monitor, computers may also include other peripheral output devices such as speakers 197 and printer 196, which may be connected through an output peripheral interface 195.

The computer 110 may operate in a networked environment using logical connections to one or more remote computers, such as a remote computer 180. The remote computer 180 may be a personal computer, a server, a router, a network PC, a peer device or other common network node, and typically includes many or all of the elements described above relative to the computer 110, although only a memory storage device 181 has been illustrated in Figure 1. The logical connections depicted in Figure 1 include a local area network (LAN) 171 and a wide area network (WAN) 173, but may also include other networks. Such networking environments are commonplace in offices, enterprise-wide computer networks, intranets and the Internet.

When used in a LAN networking environment, the computer 110 is connected to the LAN 171 through a network interface or adapter 170. When used in a WAN networking environment, the computer 110 typically includes a modem 172 or other means for establishing communications over the WAN 173, such as the Internet. The modem 172, which may be internal or external, may be connected to the system bus 121 via the user input interface 160, or other appropriate mechanism. In a networked environment, program modules depicted relative to the computer 110, or portions thereof, may be stored in the remote memory storage device. By way of example, and not limitation, Figure 1 illustrates remote application programs 185 as residing on memory device 181. It will be appreciated that the network connections shown are exemplary and other means of establishing a communications link between the computers may be used.

In some aspects, a pen digitizer 165 and accompanying pen or stylus 166 are provided in order to digitally capture freehand input. Although a direct connection between the pen digitizer 165 and the user input interface 160 is shown, in practice, the pen digitizer 165 may be coupled to the processing unit 110 directly, parallel port or other interface and the system bus 130 by any technique including wirelessly. Also, the pen 166 may have a camera associated with it and a transceiver for wirelessly transmitting image information captured by the camera to an interface interacting with bus 130. Further, the pen may have other sensing systems in addition to or in place of the camera for determining strokes of electronic ink including accelerometers, magnetometers, and gyroscopes.

It will be appreciated that the network connections shown are illustrative and other techniques for establishing a communications link between the computers can be used. The existence of any of various well-known protocols such as TCP/IP, Ethernet, FTP, HTTP and the like is presumed, and the system can be operated in a client-server configuration to permit a user to retrieve web pages from a web-based server. Any of various conventional web browsers can be used to display and manipulate data on web pages.

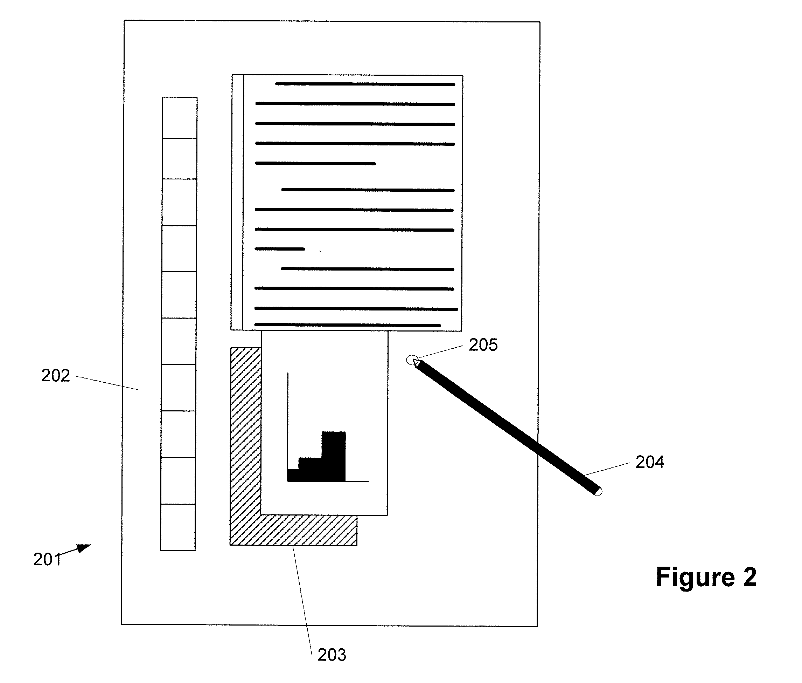

Figure 2 illustrates an illustrative tablet PC 201 that can be used in accordance with various aspects of the present invention. Any or all of the features, subsystems, and functions in the system of Figure 1 can be included in the computer of Figure 2. Tablet PC 201 includes a large display surface 202, e.g., a digitizing flat panel display, preferably, a liquid crystal display (LCD) screen, on which a plurality of windows 203 is displayed. Using stylus 204, a user can select, highlight, and/or write on the digitizing display surface 202. Examples of suitable digitizing display surfaces 202 include electromagnetic pen digitizers, such as Mutoh or Wacom pen digitizers. Other types of pen digitizers, e.g., optical digitizers, may also be used. Tablet PC 201 interprets gestures made using stylus 204 in order to manipulate data, enter text, create drawings, and/or execute conventional computer application tasks such as spreadsheets, word processing programs, and the like.

The stylus 204 may be equipped with one or more buttons or other features to augment its selection capabilities. In one embodiment, the stylus 204 could be implemented as a "pencil" or "pen", in which one end constitutes a writing portion and the other end constitutes an "eraser" end, and which, when moved across the display, indicates portions of the display are to be erased. Other types of input devices, such as a mouse, trackball, or the like could be used. Additionally, a user's own finger could be the stylus 204 and used for selecting or indicating portions of the displayed image on a touch-sensitive or proximity-sensitive display. Consequently, the term "user input device", as used herein, is intended to have a broad definition and encompasses many variations on well-known input devices such as stylus 204. Region 205 shows a feedback region or contact region permitting the user to determine where the stylus 204 as contacted the display surface 202.

In various embodiments, the system provides an ink platform as a set of COM (component object model) services that an application can use to capture, manipulate, and store ink. One service enables an application to read and write ink using the disclosed representations of ink. The ink platform may also include a mark-up language including a language like the extensible markup language (XML). Further, the system may use DCOM as another implementation. Yet further implementations may be used including the Win32 programming model and the .Net programming model from Microsoft Corporation.

### Controlling The State Of A Stylus-Based Computer

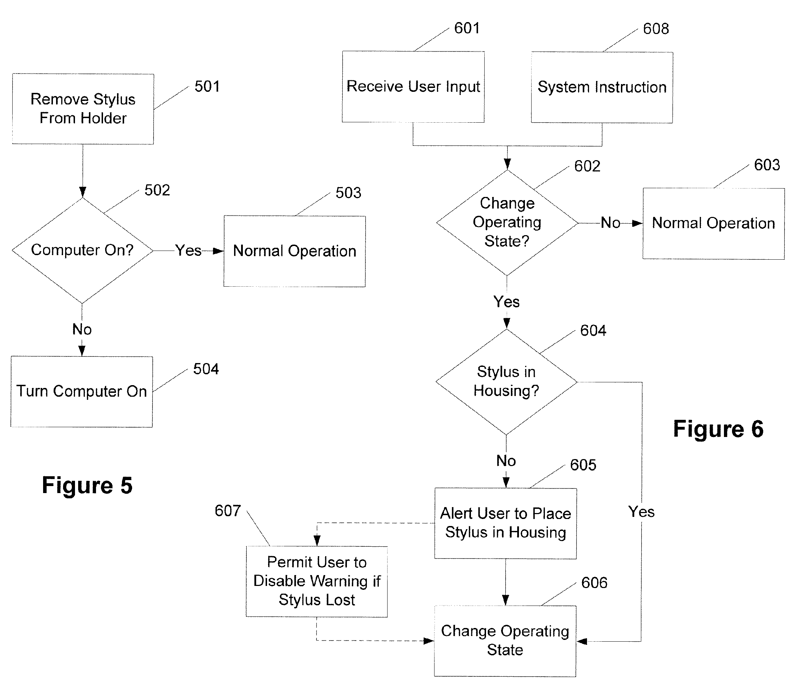

Figures 5 and 6 relate to interactions between a stylus and changing an operating state of a computer system. In particular, figure 5 shows how a system may be turned on in response to moving a stylus. In step 501, a stylus is removed from its holder. Here, the holder may be a permanent storage as shown in Figure 3A or may be a temporary storage as shown in Figure 3B. In step 502, a decision is made whether the system is on. If yes, than the system continues to operation in step 503. If no from step 502, the computer system is turned on in step 504.

Figure 6 shows modification of an operating state and warning a user regarding the stylus. In step 601, a user's input is received. In step 602, the system determines if the user has requested a change in an operating state. If no from step 602, then in step 603 normal operations are performed in accordance with the user input sensed in step 601. If yes from step 602, then the system determines whether or not the stylus is in a storage position or housing. For instance, the storage position or housing may be one of the storage positions of Figures 3A-3B. If no from step 604, then the system alerts the user to place the stylus in the housing in step 605. Next, in step 606, the operating state of the system is changed. If yes from step 604, the system may perform step 606 in which the operating state of the system is changed. Optionally, the system may provide a user with a user interface that permits the user to disable the warning of step 605, for instance, through an on-screen menu. In some situations, a user may have lost a stylus. Continuously alerting the user in step 605 to a situation that the user is aware of may prove frustrating.

Alternatively, the system may alert a user based on a system-generated change in operating state. For instance, in step 608, the system may provide a self-generated instruction to shut down or otherwise change state. The system may attempt to hibernate or enter a stand-by mode after user inactivity for a period of time. Further, the system may attempt to change its operating state when batteries that power the system are running low. The system may process the system instruction 608 as it does step 601.

### Controlling The State OfA Digitizer

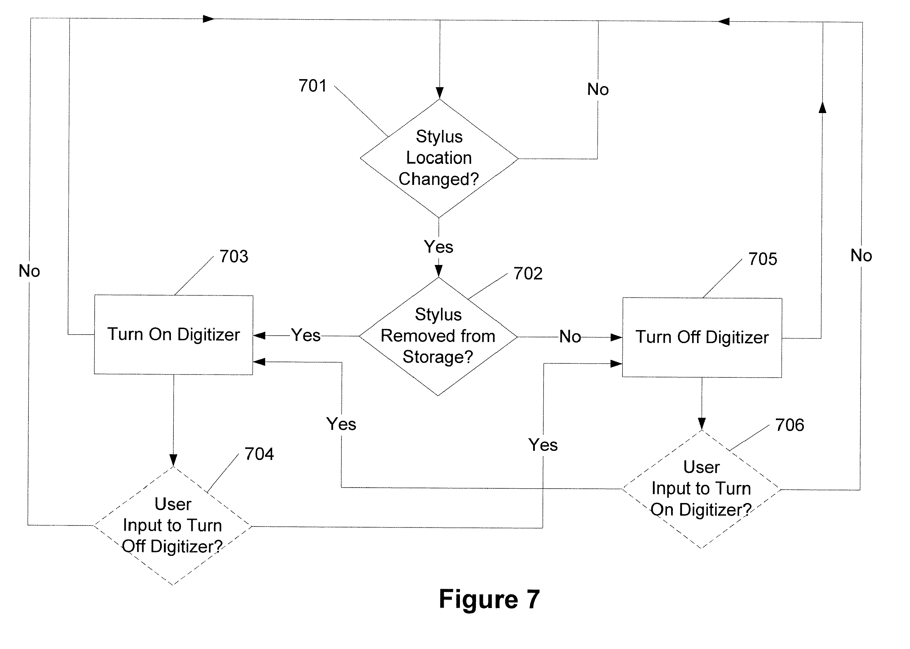

In Figure 7, the power state of a digitizer is controlled based on the location of a stylus. In step 701, the system determines whether a stylus' location has changed. If no, the system returns back to step 701. If yes from step 701, the system determines if the stylus has been removed from storage in step 702. As above, the storage may be any of the storage locations described in Figures 3A and 38.

If yes from step 702, then the digitizer is turned on in step 703. The process then returns back to step 701 and awaits the stylus location change. If no from step 702, then the system turns off the digitizer in step 705 and returns to step 701.

In steps 703 and 705, power is provided to and removed from the digitizer, respectively. Alternatively, the system may perform other tasks that reduce the power consumption of the digitizer including, but not limited to, minimize the sampling rate at which information is gathered the digitizer, modifying the duty cycle of power been applied to the digitizer, and the like.

In some situations a user may desire to override automated control of power to digitizer. For instance, if a user is using two styluses and places a stylus in storage, the user would want the second stylus to be recognized by the digitizer. In this situation, the system may provide the user with an option to turn on the digitizer in step 706. If yes from step 706, the digitizer is turned on in step 703. If no from step 706, the system returns to step 701. Similarly, a stylus may be removed storage and lost. In this situation, a user may desire to minimize power consumption of the digitizer. Here, the system may provide a user with an interface (for instance, an on-screen interface) that allows the user to turn off or minimize power consumption by the digitizer as shown by step 704. If a user has selected to turn off the digitizer from step 704, then the digitizer is turned off in step 705. Alternatively, if the user has not decided to turn off the digitizer, the digitizer remains on and the system returns to step 701.

The present invention has been described in terms of preferred and exemplary embodiments thereof Numerous other embodiments, modifications and variations within the scope and spirit of the appended claims will occur to persons of ordinary skill in the art from a review of this disclosure.

## Claims

1. A process for controlling power consumption of a digitizer comprising the steps of:
receiving an indication of a location change of a stylus;
determining if said stylus was removed from a storage; and
modifying the power consumption of said digitizer based on said determining step.

2. The process according to claim 1, wherein said modifying step includes turning on said digitizer.

3. The process according to claim 1, wherein said modifying step includes modifying a duty cycle of said digitizer.

4. The process according to claim 1, wherein said modifying step includes turning off said digitizer.

5. The process according to claim 1, wherein said modifying step includes modifying a sampling rate of said digitizer.

6. The process according to claim 2, further comprising the steps of:
receiving user input to turn off said digitizer; and
turning off said digitizer.

7. The process according to claim 4, further comprising the steps of:
receiving user input to turn on said digitizer; and
turning on said digitizer.

8. A system for controlling power consumption of a digitizer comprising:
means for receiving an indication of a location change of a stylus;
means for determining if said stylus was removed from a storage; and
means for modifying the power consumption of said digitizer based on a result from said means for determining.

9. The system according to claim 8, wherein said means for modifying includes means for turning on said digitizer.

10. The system according to claim 8, wherein said means for modifying includes means for modifying a duty cycle of said digitizer.

11. The system according to claim 8, wherein said means for modifying includes means for turning off said digitizer.

12. The system according to claim 8, wherein said means for modifying includes means for modifying a sampling rate of said digitizer.

13. The system according to claim 9, further comprising:
means for receiving user input to turn off said digitizer; and
means for turning off said digitizer.

14. The system according to claim 11, further comprising:
means for receiving user input to turn on said digitizer; and
means for turning on said digitizer.

15. A system for determining whether a location of a stylus comprising:
a chamber;
at least one sensor associated with said chamber, where said at least one sensor determines whether said stylus has been placed in or removed from said chamber.

16. The system according to claim 15, further comprising:
a second sensor.

17. The system according to claim 15, further comprising:
at least a second sensor.

18. The system according to claim 15, wherein said chamber is in a housing of a stylus-based computer.

19. The system according to claim 15, wherein said chamber is formed in a receptacle attached to the outside of a stylus-based computer.

20. The system according to claim 15, wherein said chamber is formed in a receptacle attached to the outside of a stylus-based computer and extends at least into the surface of said stylus-based computer.
